# EUROPÄISCHE PATENTSCHRIFT

(11) **EP 1 097 019 B1**
(45) Veröffentlichungstag und Bekanntmachung des Hinweises auf die Patenterteilung: **21.05.2003**
(21) Anmeldenummer: 99929222.0
(22) Anmeldetag: 15.06.1999
(51) Int. Cl.: B23K 1/015

(54) **VERFAHREN ZUM STEUERN DER WÄRMEÜBERTRAGUNG AUF EIN WERKSTÜCK BEIM DAMPFPHASENLÖTEN**
METHOD FOR CONTROLLING HEAT TRANSFER ON A WORK PIECE DURING CONDENSATION SOLDERING
PROCEDE DE COMMANDE DU TRANSFERT DE CHALEUR SUR UNE PIECE LORS DU BRASAGE EN PHASE VAPEUR

(30) Priorität: 15.06.1998 DE 19826520
(43) Veröffentlichungstag der Anmeldung: 09.05.2001
(73) Patentinhaber: LEICHT, Helmut, Walter, D-86343 Königsbrunn (DE)
(72) Erfinder: LEICHT, Helmut, Walter, D-86343 Königsbrunn (DE)
(74) Vertreter: VOSSIUS & PARTNER
(86) Internationale Anmeldenummer: EP9904134
(87) Internationale Veröffentlichungsnummer: WO99065634

(56) Entgegenhaltungen:
- FR-A- 2 537 912
- US-A- 5 038 496
- US-A- 5 542 596

## Beschreibung

Die Erfindung betrifft ein Verfahren zum Steuern der Wärmeübertragung auf ein Werkstück beim Dampfphasenlöten.

Beim Dampfphasenlöten kommt es beim Eintauchen in die gesättigte Dampfdecke zu einer raschen Erwärmung des Lötgutes. Auch das Umschmelzen des Lotes zum Löten kann sehr schnell erfolgen. Die Folge sind oft unangenehme Nebenwirkungen, wie z.B. das Entstehen von Lotperlen, wenn Lotpaste auf einer Leiterplatte zu schnell umgeschmolzen wird. Daher ist es wünschenswert, die rasche Wärmeübertragung in der Dampfphase zu verlangsamen, um das Lötgut langsamer erwärmen zu können.

Es ist bekannt, daß man eine langsame Wärmeübertragung beim Dampfphasenlöten dadurch erreichen kann, daß man ein Werkstück mit dem Lötgut nur im Oberflächenbereich der Dampfphase eintauchen läßt. Dadurch kondensiert der Dampf überwiegend von unten und nur wenig von oberhalb des Lötgutes. Üblicherweise verweilt man dann in der oberen Position der Dampfphase, bis die Lotpaste langsam schmilzt. Erst dann fährt man weiter in die Dampfphase nach unten, um die Lötstellen aller Bauelement gut durchzuwärmen, damit das Lot alle zu lötenden Teile gut benetzen kann.

Bei der bekannten Methode besteht allerdings eine Schwierigkeit darin, daß die Wärmeübertragung zwar langsamer erfolgt, jedoch auch der Lötprozeß erheblich verlängert wird. Obwohl das eigentliche Löten z.B. in 30 sec erledigt sein kann, wird bei dem bekannten Verfahren eine Leiterplatte z.B. 180 sec im oberen Bereich der Dampfphase gehalten, um langsam umschmelzen zu können. Dadurch entstehen Probleme bei Prozessen mit kritischer Prozeßzeit, die zu erhöhten Kosten führen können.

Aus der WO98/41352, das als nächsliegender Stand der Technick angesehen wird, ist ein Verfahren zur Wärmebehandlung von Werkstücken, insbesondere zum Heißverbinden von elektronischen Bauteilen oder Platinen, mit heißem Dampf in einer Behandlungsvorrichtung mit mindestens einem Dampferzeuger bekannt. Bei diesem Verfahren werden die Werkstücke mit Dampf in steuerbarer Weise aufgeheizt. Dabei wird die Dampferzeugung in Abhängigkeit von der benötigten Wärmemenge zur Erzeugung eines gewünschten Temperaturgradienten der Werkstücke gesteuert.

Demgegenüber liegt der Erfindung die Aufgabe zugrunde, ein Verfahren zum Steuern der Wärmeübertragung auf ein Werkstück beim Dampfphasenlöten zur Verfügung zu stellen, bei dem eine schnellere Wärmeübertragung ohne die genannten nachteiligen Nebenwirkungen erfolgt und die Temperatur des Werkstückes in einen engen Temperaturbereich geregelt werden kann.

Die Aufgabe wird mit den Merkmalen der Patentansprüche gelöst.

Bei der Lösung geht die Erfindung von dem Grundgedanken aus, ein Werkstück in der Dampfphase bis zu einer bestimmten Temperatur, die gewöhnlich unterhalb der Schmelztemperatur des Lotes liegt, schnell zu erwärmen und dann durch Verändern der Dampfmenge oberhalb des Werkstücks die Temperatur zu steuern, wobei vorzugsweise durch Reduzieren der Dampfmenge eine langsame Erwärmung bis zur Schmelztemperatur des Lotes erfolgt.

Insbesondere betrifft die Erfindung auch die Wärmeübertragung an der Grenze zwischen Dampfphase und dampffreien Raum.

Die Erfindung geht davon aus, daß die erzeugte Dampfmenge pro Zeiteinheit eine Regelgröße für die Geschwindigkeit der Wärmeübertragung ist. Ist diese Dampfmenge pro Zeiteinheit entsprechend bemessen, so kondensiert das gesamte Dampfvolumen oberhalb des Lötgutes beim Eintauchen desselben in die Dampfphase auf ihm ab. Dies führt zu einem entsprechend raschen Temperaturanstieg. Auf dem Lötgut kann maximal soviel Dampfmenge kondensieren, wie das Lötgut Wärme pro Zeiteinheit aufnimmt. Die Dampfmenge muß so bemessen sein, daß nur soviel vorhanden ist, als auch abkondensieren kann, wenn das Lötgut in die Dampfphase fährt. In diesem Fall kondensiert das Dampfvolumen auf dem Lötgut, und die obere Grenze der Dampfdecke befindet sich am Berührungsniveau des Lötgutes. Steigt die Temperatur des Lötgutes, kann nicht mehr soviel Dampf auf ihm kondensieren, und die Dampfdecke steigt über das Lötgut. Damit kann auch wieder von oben Dampf kondensieren, was wiederum zu einem schnelleren Temperaturanstieg im Lötgut führt. Steht mehr Dampf zur Verfügung (oder wird er in so kurzer Zeit produziert) als beim Eintauchen in die Dampfphase unmittelbar abkondensieren kann, so befindet sich auch die Grenze der Dampfdecke oberhalb des Lötgutes, und es wird der maximale Wärmeübergang auf das Lötgut von allen Seiten erreicht. In diesem Falle läßt sich das erfindungsgemäße Verfahren der langsamen Erwärmung nicht anwenden, da die verzögerte Wärmeübertragung darauf beruht, daß der Dampf bei der langsamen Wärmeübertragung zum größten Teil nur unterhalb des Lötgutes kondensiert.

Der Vorteil der Erfindung liegt in einem schnellen und kostengünstigen Verfahren für das Dampfphasenlöten und in einer genauen Regelung der Temperatur des Werkstücks.

Im folgenden wird die Erfindung anhand der einzigen Zeichnung näher erläutert. Es zeigt:

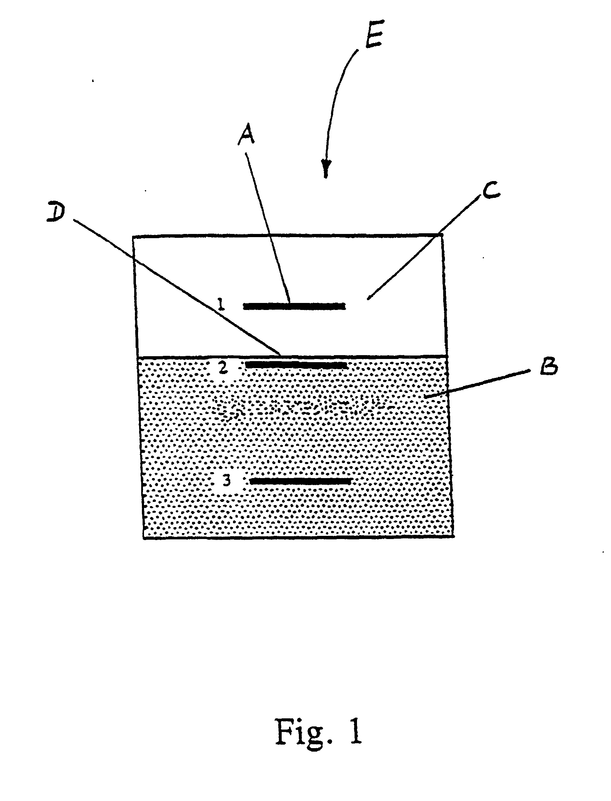

- Fig. 1: die schematische Darstellung einer Prozeßkammer für das Dampfphasenlöten.

In einer Prozeßkammer E für das Dampfphasenlöten befindet sich im unteren Bereich die Dampfphase B, an die sich oberhalb der Grenze D ein dampffreier Raum C anschließt. Ein Werkstück A kann aus einer Position 1 in die Positionen 2 bzw. 3 zum Löten in der Dampfphase B eingefahren werden.

Bei dem erfindungsgemäßen Verfahren wird das zu lötende Werkstück A nach der Zufuhr aus der Position 1 in die Position 3 in der Dampfphase B abgesenkt. Das Dampfvolumen oberhalb des Lötgutes kondensiert auf dem Lötgut, und von unten erfolgt die Kondensation durch neu erzeugten Dampf. Wenn eine bestimmte Temperatur des Lötgutes erreicht ist, fährt das Werkstück nach oben, so daß die Kondensation von unten verringert wird, je nachdem wie schnell die Dampfphase, von unten kommend, dem Lötgut folgt. Das Nachfolgen der Dampfphase hängt vor allem von der Dampferzeugung pro Zeiteinheit ab, die das System in der Lage ist zu leisten. Durch verschiedene Positionen 2, 3 des Werkstücks A ist es möglich, das Lötgut auf einem bestimmten Temperaturniveau zu halten, es wieder abkühlen zu lassen, oder einen langsamen Temperaturanstieg zuzulassen.

In einem bevorzugten Verfahren wird das Werkstück A aus der Position 1 in dem dampffreien Raum C in die Dampfphase B auf die Position 3 abgesenkt. In dieser Position erfolgt eine schnelle Erwärmung auf eine Temperatur unterhalb der Schmelztemperatur des Lotes. Danach wird das Werkstück in die Position 2 an der Grenze D der Dampfphase B angehoben. In dieser Position erfolgt eine weitere Erwärmung des Werkstückes im wesentlichen von seiner Unterseite aus, so daß die Schmelztemperatur des Lotes langsam erreicht wird, wobei ein schonendes Löten ohne unerwünschte Nebeneffekte erreicht wird. Danach kann das Werkstück A die Dampfphase B verlassen oder zur weiteren Erwärmung nach unten fahren. Die Geschwindigkeit der weiteren Erwärmung des Werkstücks A beim Übergang in die Positionen 2 wird auch durch die Geschwindigkeit des Anhebens und die produzierte Dampfmenge pro Zeiteinheit bestimmt.

Durch Absenken oder Anheben im Bereich der Position 2 kann die Temperatur des Lötgutes in einem engen Temperaturbereich gehalten werden, indem es z.B. bei einer Temperatur unterhalb 170°C geringfügig nach unten gefahren wird und bei einer Temperatur von über 170°C geringfügig nach oben gefahren wird, so daß im wesentlichen eine Temperatur von 170°C eingeregelt wird.

## Patentansprüche

1. Verfahren zum Steuern der Wärmeübertragung auf ein Werkstück (A) beim Dampfphasenlöten, wobei das Werkstück (A) in der. Dampfphase (B) zuerst bis zu einer bestimmten Temperatur schnell erwärmt wird und dann durch Veränderung der Dampfmenge an der Werkstückoberfläche die Temperatur gesteuert wird, **dadurch gekennzeichnet, daß** eine bestimmte Temperatur des Werkstücks (A) durch Absenken oder Anheben des Werkstücks (A) in der Dampfphase (B) geregelt wird.

2. Verfahren nach Anspruch 1, **dadurch gekennzeichnet, daß** die Geschwindigkeit der Erwärmung des Werkstückes (A) durch die erzeugte Dampfmenge pro Zeiteinheit und durch die Position des Werkstücks in der Dampfphase (B) bestimmt wird.

3. Verfahren nach Anspruch 1 oder 2, mit den Schritten:
(a) Absenken des Werkstücks (A) aus einer Position (1) im dampffreien Raum (C) in die Dampfphase (B) bis zu einer Position (3), in der das Werkstück (A) vollständig von der Dampfphase umgeben ist,
(b) Erwärmen des Werkstücks (A) auf eine bestimmte Temperatur durch Kondensation der Dampfphase (B), und
(c) Anheben des Werkstücks (A) bis höchstens zu einer Position (2) an der Grenze (D) zwischen der Dampfphase (B) und dem dampffreien Raum (C).

4. Verfahren nach Anspruch 3, **dadurch gekennzeichnet, daß** das Anheben des Werkstücks (A) in Schritt (c) mit unterschiedlichen Geschwindigkeiten erfolgt.

5. Verfahren nach Anspruch 3 oder 4, **dadurch gekennzeichnet, daß** im Schritt (c) das Werkstück (A) in eine Position (2) an der Grenze (D) angehoben wird.

6. Verfahren nach einem der Ansprüche 1 bis 5, **dadurch gekennzeichnet, daß** die bestimmte Temperatur 170°C ist.

7. Verfahren nach einem der Ansprüche 3 bis 6, **dadurch gekennzeichnet, daß** in Schritt (b) die bestimmte Temperatur des Werkstücks (A) unterhalb des Schmelztemperatur des Lotes liegt und im Schritt (c) die Schmelztemperatur des Lotes erreicht wird.

## Claims

1. A process for controlling the heat transfer to a work piece (A) during vapour phase soldering, wherein the work piece (A) is first rapidly heated in the vapour phase (B) to a predetermined temperature, and then the temperature is controlled by varying the vapour amount at the surface of the work piece, **characterized in that** a predetermined temperature of the work piece (A) is adjusted by moving the work piece (A) down or up in the vapour phase (B).

2. The process according to claim 1, **characterized in that** the heating speed of the work piece (A) is determined by the amount of vapour produced per time unit and by the position of the work piece in the vapour phase (B).

3. The process according to claim 1 or 2 comprising the steps of
(a) lowering the work piece (A) from a position (1) in the vapour-free space (C) into the vapour phase (B) to a position (3) in which the work piece (A) is completely surrounded by the vapour phase,
(b) heating the work piece (A) to a predetermined temperature by condensation of the vapour phase (B), and
(c) moving the work piece (A) upwards to not higher than a position (2) at the boundary (D) between the vapour phase (B) and the vapour-free space (C).

4. The process according to claim 3, **characterized in that** in step (c) the work piece (A) is moved upwards at different speeds.

5. The process according to claim 3 or 4, **characterized in that** in step (c) the work piece (A) is moved upwards to a position (2) at the boundary (D).

6. The process according to any one of claims 1 to 5, **characterized in that** the predetermined temperature is 170°C.

7. The process according to any one of claims 3 to 6, **characterized in that** in step (b) the predetermined temperature of the work piece (A) lies below the melting temperature of the solder and that in step (c) the melting temperature of the solder is reached.

## Revendications

1. Procédé de commande du transfert de chaleur sur une pièce (A) lors du brasage en phase vapeur, la pièce (A) étant tout d'abord chauffée rapidement, dans la phase vapeur (B), jusqu'à une température déterminée, et la température étant réglée ensuite en modifiant la quantité de vapeur au niveau de la surface de la pièce, **caractérisé en ce qu'**une température déterminée de la pièce (A) est réglée par abaissement ou soulèvement de la pièce (A) dans la phase vapeur (B).

2. Procédé selon la revendication 1, **caractérisé en ce que** la vitesse d'échauffement de la pièce (A) est déterminée par la quantité de vapeur produite par unité de temps et par la position de la pièce dans la phase vapeur (B).

3. Procédé selon la revendication 1 ou 2, comprenant les étapes consistant à:
(a) abaisser la pièce (A) d'une position (1) dans l'espace exempt de vapeur (C), dans la phase vapeur (B) jusque dans une position (3), dans laquelle la pièce (A) est complètement entourée par la phase vapeur,
(b) chauffage de la pièce (A) à une température déterminée par condensation de la phase vapeur (B), et
(c) soulèvement de la pièce (A) au maximum jusque dans une position (2) au niveau de la limite (D) entre la phase vapeur (B) et l'espace exempt de vapeur (C).

4. Procédé selon la revendication 3, **caractérisé en ce que** le soulèvement de la pièce (A) lors de l'étape (c) s'effectue à des vitesses différentes.

5. Procédé selon la revendication 3 ou 4, **caractérisé en ce que** lors de l'étape (C), la pièce (A) est soulevée dans une position (2) au niveau de la limite (D).

6. Procédé selon l'une des revendications 1 à 5, **caractérisé en ce que** la température déterminée est 170°C.

7. Procédé selon l'une des revendications 3 à 6, **caractérisé en ce que** lors de l'étape (b), la température déterminée de la pièce (A) est inférieure à la température de fusion de la brasure et que lors de l'étape (c), la température de fusion de la brasure est atteinte.
